# Europäisches Patentamt

## European Patent Office

## Office européen des brevets

(19)

(11) Veröffentlichungsnummer: **0 091 121**
**B1**

(12) **EUROPÄISCHE PATENTSCHRIFT**

(45) Veröffentlichungstag der Patentschrift:
**16.07.86**

(51) Int. Cl.⁴: **C 02 F 3/12**, C 02 F 3/10

(21) Anmeldenummer: **83103318.8**

(22) Anmeldetag: **05.04.83**

(54) **Verfahren und Vorrichtung zur biologischen Abwasserreinigung.**

(30) Priorität: **07.04.82 DE 3213074**

(43) Veröffentlichungstag der Anmeldung:
**12.10.83 Patentblatt 83/41**

(45) Bekanntmachung des Hinweises auf die Patenterteilung:
**16.07.86 Patentblatt 86/29**

(84) Benannte Vertragsstaaten:
**AT CH DE FR GB IT LI NL SE**

(56) Entgegenhaltungen:
**EP - A - 0 017 888**
**DE - A - 2 550 818**
**DE - C - 632 698**
**FR - A - 2 224 412**
**FR - A - 2 372 777**
**GB - A - 1 412 587**

(73) Patentinhaber: **Linde Aktiengesellschaft,**
**Abraham-Lincoln-Strasse 21, D-6200 Wiesbaden (DE)**

(72) Erfinder: **Frydman, Allen, Wilhelm-Busch-Strasse 18,**
**D-8000 München 71 (DE)**
Erfinder: **Reimann, Hans, Dr. rer. nat.,**
**Rudolf-Wilke-Weg 21, D-8000 München 71 (DE)**

(74) Vertreter: **Schaefer, Gerhard, Dr., Linde**
**Aktiengesellschaft Zentrale Patentabteilung,**
**D-8023 Höllriegelskreuth (DE)**

ACTORUM AG

## Beschreibung

Die Erfindung betrifft ein Verfahren zur biologischen Abwasserreinigung in einem Reaktor in Gegenwart von Trägermaterial für Biomasse, bei dem das Trägermaterial vor seiner Verwendung im Reaktor mit den Reinigungsvorgang günstig beeinflussenden Stoffen beladen und anschliessend gegebenenfalls gelagert wird, sowie eine Vorrichtung zur Durchführung des Verfahrens.

Bekanntermassen verwendet man bei der Inbetriebnahme von Abwasserreinigungsanlagen häufig das Prinzip des Animpfens, um die Anfahrphase zu verkürzen. Die anzufahrende Abwasserreinigungsanlage wird je nach Bedarf mit nitrifizierenden (Nitrosomonas und Nitrobakter), anaeroben (Anaerobier) oder phosphatabbauenden Bakterien (Acinetobakter) geimpft. Zu diesem Zweck verwendet man z.B. Belebtschlamm einer sich bereits in Betrieb befindenden Anlage, der die entsprechenden Bakterien enthält. Aufgrund der nur langsamen Vermehrung der Bakterien kann sich jedoch die Anfahrphase über Wochen hinziehen, was insbesondere bei Verwendung von Trägermaterial für Biomasse vermieden werden soll.

Zur Verkürzung der Anfahrphase ist es bei einem in der FR-A 2 372 777 beschriebenen Verfahren zur Abwasserreinigung unter Verwendung eines biologischen Filters mit tonhaltigen Trägerteilchen als Ansiedlungsfläche für Mikroorganismen bekannt, die Trägerteilchen vor dem Einsatz im Filter mit ausgewählten Hefen zu besäen. Das Besäen der Trägerteilchen erfolgt dabei während deren Herstellung oder unmittelbar vor deren Einsatz im Filter durch Besprengen mit einer wässrigen, die Hefen enthaltenen Lösung und durch anschliessendes Trocknen mittels heisser Luft. Das Besprengen der Trägerteilchen mit der wässrigen Lösung ergibt jedoch nur eine ungleichmässige Beschichtung der Trägerteilchen mit den Hefen, wobei auch ein grosser Teil der wässrigen Lösung von den Trägerteilchen einfach wieder abläuft, ohne dass die Hefen auf den Trägerteilchen haften bleiben. Der Wirkungsgrad dieses Verfahrens zum Besäen der Trägerteilchen ist somit gering.

Der Erfindung liegt die Aufgabe zugrunde, ein Verfahren der eingangs genannten Art zur Abwasserreinigung sowie eine Vorrichtung zur Durchführung des Verfahrens so auszugestalten, dass auf einfache und wirtschaftliche Weise ein wirkungsvolles Beladen von Trägerteilchen mit den Reinigungsvorgang günstig beeinflussenden Stoffen ermöglicht wird.

Diese Aufgabe wird erfindungsgemäss dadurch gelöst, dass ein offenporiges und kompressibles Trägermaterial verwendet wird und dass das Beladen des Trägermaterials in Gegenwart von ausgewählten, in Wasser verteilten Bakterien und/oder feinteiligen anorganischen und/oder organischen Stoffen durch Zusammendrücken des Trägermaterials und gleichzeitiges Auspressen der Luft und anschliessendes Entspannen unter gleichzeitiger Aufnahme von Wasser zusammen mit den ausgewählten Bakterien und/oder Stoffen in das Innere des Trägermaterials durchgeführt wird.

Mit dieser Verfahrensweise wird ohne ein dauerndes Umpumpen von wässrigen, die Bakterien oder anorganischen oder organischen Stoffe enthaltenden Lösungen ein gleichmässiges und dauerhaftes Beladen des Trägermaterials erreicht, so dass sich das mit Bakterien und/oder Stoffen dotierte bzw. beladene Trägermaterial in hervorragender Weise dazu eignet, die Anfahrphase einer Abwasserreinigungsanlage zu verkürzen.

Das dotierte Trägermaterial wird in den Reaktor, der beispielsweise ein Umlaufgraben, z.B. ein Oxidationsteich, ein Belebungsbecken, Wirbelbett- oder Festbettreaktor sein kann, der anzufahrenden Anlage eingebracht und sofort können die im Trägermaterial eingelagerten Bakterien mit dem Stoffabbau beginnen sowie sich gleichzeitig weitervermehren. Von besonderem Vorteil ist es dabei auch, dass das dotierte Trägermaterial nicht sofort nach dem Beladen mit den Bakterien und/oder Stoffen verwendet werden muss, sondern gegebenenfalls zuerst gelagert wird.

Ein weiterer Vorteil der Erfindung liegt darin, dass das Trägermaterial nicht nur mit entsprechenden Bakterien, sondern überdies auch mit feinteiligen anorganischen und/oder organischen Stoffen beladen werden kann. Als anorganische Stoffe kommen z.B. Aktivkohle und Aluminiumoxid in Betracht. Aktivkohle wirkt dabei bekanntermassen infolge seiner grossen aktiven Oberfläche als erprobtes Adsorbens für Mikroorganismen, für Abwasserinhaltsstoffe und für Sauerstoff, und Aluminiumoxid als Adsorbens für bestimmte Inhaltsstoffe des Abwassers. Weiter kann beispielsweise hydrophobierte Kieselsäure als Adsorbens für Fette und Öle in das Trägermaterial eingelagert werden.

Zur Aufnahme der Bakterien und/oder Stoffe wird das Trägermaterial vorzugsweise auf 10 bis 30% seines ursprünglichen Volumens zusammengedrückt. Als besonders vorteilhaft hat es sich bewährt, wenn das Zusammendrücken und Entspannen des Trägermaterials mehrmals wiederholt wird.

Die Erfindung betrifft überdies eine Vorrichtung zur Durchführung des Verfahrens mit einer Einrichtung zum Beladen des Trägermaterials. Diese ist durch einen Behälter mit einer Presseinrichtung, eine an den Behälter angeschlossene Einfülleinrichtung für das Trägermaterial, eine Zuleitung für die im Wasser verteilten, ausgewählten Bakterien und/oder Stoffe sowie eine Auslassleitung für das beladene Trägermaterial gekennzeichnet.

Insbesondere bei Beladen des Trägermaterials mit anaeroben Bakterien ist der Behälter bevorzugt geschlossen ausgebildet. Besonders vorteilhaft ist überdies die Presseinrichtung als Kolben ausgebildet.

Die Erfindung kann zum Anfahren jeder Abwasserreinigungsanlage angewendet werden. Ausserdem kann jedoch das beladene Trägermaterial auch zum schnellen Beheben von Störungen in einer Abwasserreinigungsanlage oder grundsätzlich zur Unterstützung der in Abwasserreinigungsanlagen ablaufenden Vorgänge eingesetzt werden.

Die Erfindung sei im folgenden anhand eines schematisch dargestellten Ausführungsbeispiels näher erläutert:

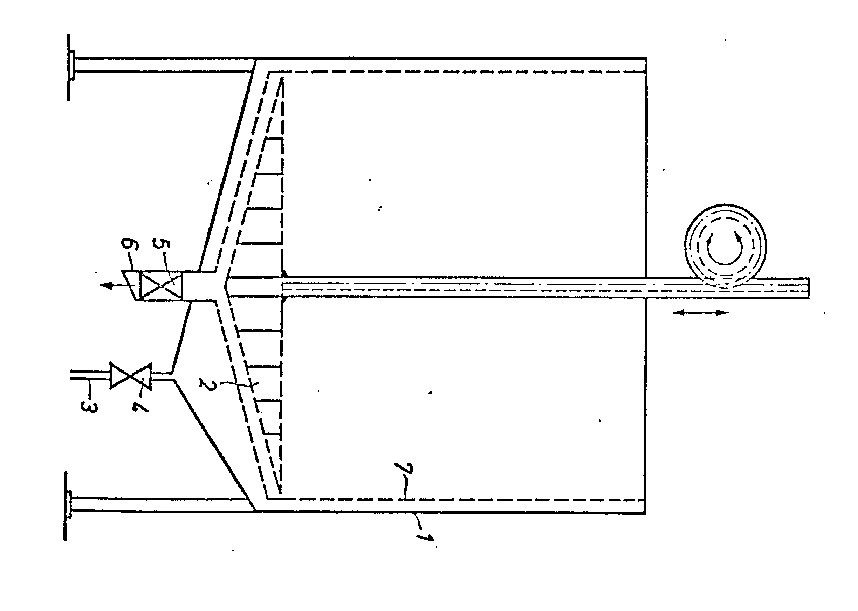

Die Figur zeigt einen Behälter 1 zum Beladen von Trägermaterial, der eine als Kolben ausgebildete Presseinrichtung 2 aufweist. Über eine Zuleitung 3 mit Ventil 4 wird der Behälter beispielsweise bis zur Hälfte mit die ausgewählten Bakterien und/oder Stoffe enthaltenden wässrigen Suspension gefüllt. Diese kann z.B. einer beliebigen, sich in Betrieb befindlichen Abwasserreinigungsanlage entnommen werden. Anschliessend wird Ventil 4 geschlossen und von oben das Trägermaterial eingefüllt. Soll das Trägermaterial dabei mit anaeroben Bakterien beladen werden, so weist der Behälter 1 eine nichtdargestellte Abdeckung mit einer verschliessbaren Einfüllöffnung auf.

Durch Senken des Kolbens 2 wird das flexible Trägermaterial zusammengedrückt, bevorzugt auf 10 bis 30% seines ursprünglichen Volumens, und gleichzeitig die Luft ausgepresst. Beim anschliessenden Heben des Kolbens (Entspannen des Trägermaterials) nimmt das Trägermaterial Wasser, Bakterien, feinteilige organische und/oder anorganische Stoffe auf, die sich bevorzugt im Inneren des Trägermaterials anlagern. Dieser Vorgang wird bevorzugt mehrmals, beispielsweise zwei- bis dreimal, wiederholt.

Anschliessend wird Ventil 4 geöffnet, um den restlichen, nichtaufgenommenen Schlamm der Suspension abzuziehen. Durch Öffnen des Ventils 5 in einer Auslassleitung 6 kann das beladene Trägermaterial dann aus dem Behälter 1 entnommen werden.

Zur vereinfachten Durchführung des Verfahrens ist es von Vorteil, wenn das Trägermaterial in zerkleinerter Form vorliegt, so dass es ohne weiteres in den Behälter 1 eingefüllt bzw. über Leitung 6 entnommen werden kann. Um zu verhindern, dass das Trägermaterial über Leitung 3 zusammen mit dem restlichen Schlamm abgezogen wird, ist der Behälter 1 bevorzugt mit einem Siebblech 7 ausgestattet, das das Trägermaterial zurückhält.

Nach Entnahme aus dem Behälter 1 kann das beladene bzw. dotierte Trägermaterial entweder sofort in dem Reaktor der Abwasserreinigungsanlage verwendet werden. Alternativ ist es jedoch auch möglich, das beladene Trägermaterial zuerst zu lagern und anschliessend zur jeweiligen Einsatzstelle zu transportieren.

## Patentansprüche

1. Verfahren zur biologischen Abwasserreinigung in einem Reaktor in Gegenwart von Trägermaterial für Biomasse, bei dem das Trägermaterial vor seiner Verwendung im Reaktor mit den Reinigungsvorgang günstig beeinflussenden Stoffen beladen und anschliessend gegebenenfalls gelagert wird, dadurch gekennzeichnet, dass ein offenporiges und kompressibles Trägermaterial verwendet wird, und das Beladen des Trägermaterials in Gegenwart von ausgewählten, in Wasser verteilten Bakterien und/oder feinteiligen anorganischen und/oder organischen Stoffen durch Zusammendrücken des Trägermaterials und gleichzeitiges Auspressen der Luft und anschliessendes Entspannen unter gleichzeitiger Aufnahme von Wasser zusammen mit den ausgewählten Bakterien und/oder Stoffen in das Innere des Trägermaterials durchgeführt wird.

2. Verfahren nach Anspruch 1, dadurch gekennzeichnet, dass das Trägermaterial auf 10 bis 30% seines ursprünglichen Volumens zusammengedrückt wird.

3. Verfahren nach Anspruch 1 oder 2, dadurch gekennzeichnet, dass das Zusammendrücken und Entspannen des Trägermaterials mehrmals wiederholt wird.

4. Vorrichtung zur Durchführung des Verfahrens nach einem der Ansprüche 1 bis 3 mit einer Einrichtung zum Beladen von Trägermaterial, gekennzeichnet durch einen Behälter (1) mit einer Presseinrichtung 2), eine an den Behälter angeschlossene Einfülleinrichtung für das Trägermaterial, eine Zuleitung (3) für die im Wasser verteilten ausgewählten Bakterien und/oder Stoffe sowie eine Auslassleitung (6) für das beladene Trägermaterial.

5. Vorrichtung nach Anspruch 4, dadurch gekennzeichnet, dass der Behälter (1) geschlossen ausgebildet ist.

6. Vorrichtung nach Anspruch 4 oder 5, dadurch gekennzeichnet, dass die Presseinrichtung (2) als Kolben ausgebildet ist.

## Revendications

1. Procédé pour l'épuration biologique d'eaux usées dans un réacteur, en présence d'une matière de support de biomasse, suivant lequel la matière de support est chargée, avant son utilisation dans le réacteur, en substances influençant favorablement le processus d'épuration et est ensuite, le cas échéant, stocké, caractérisé en ce qu'une matière compressible et à pores ouverts est utilisée et en ce que le chargement de la matière porteuse est effectué en présence de bactéries et/ou de substances minérales et/ou organiques finement divisées, sélectionnées et réparties dans de l'eau, par compression de la matière porteuse et éjection simultanée de l'air suivies d'une détente avec absorption simultanée d'eau et des bactéries et/ou substances sélectionnées, à l'intérieur de la matière porteuse.

2. Procédé selon la revendication 1, caractérisé en ce que la matière porteuse est comprimée 10 à 30% de volume initial.

3. Procédé selon la revendication 1 ou 2, caractérisé en ce que la compression et la détente de la matière porteuse son effectuées plusieurs fois.

4. Appareillage pour la mise en œuvre du procédé selon l'une des revendications 1 à 3, comportant un dispositif pour charger d'une matière porteuse, caractérisé par un récipient (1) pourvu d'un dispositif de compression (2), un dispositif de remplissage pour la matière porteuse qui est relié au récipient, un conduit d'admission (3) des bactéries et/ou substances sélectionnées et réparties dans de l'eau et un conduit de sortie (6) pour la matière porteuse chargée.

5. Appareillage selon la revendication 4, caractérisé en ce que le récipient (1) est fermé.

6. Appareillage selon la revendication 4 ou 5, caractérisé en ce que le dispositif de compression (2) est constitué par un piston.

## Claims

1. A process for the biological purification of waste water in a reactor in the presence of carrier material for biologically-active material, wherein, prior to its use in the reactor, the carrier material is charged with substances which favourably influence the purification prodess, and, if necessary, subsequently stored, characterised in that an open-pore and compressible carrier material is used and charging of the carrier material is carried out in the presence of selected bacteria and/or finely-divided inorganic and/or organic substances, suspended in water, by compressing the carrier material and simultaneously forcing out the air and subsequently expanding it whilst simultaneously absorbing water together with the selected bacteria and/or substances into the interior of the carrier material.

2. A process as claimed in claim 1, characterised in that the carrier material is compressed to 10 to 30% of its original volume.

3. A process as claimed in claim 1 or claim 2, characterised in that the compression and expansion of the carrier material is carried out repeatedly.

4. Apparatus for carrying out the process claimed in one of claims 1 to 3 comprising a device for charging carrier material, characterised by a container (1) having a pressing device (2), a filling device for the carrier material connected to the container, a supply line (3) for the selected bacteria and/or substances, and a discharge line (6) for the charged carrier material.

5. Apparatus as claimed in claim 4, characterised in that the container (1) is sealed.

6. Apparatus as claimed in claim 4 or claim 5, characterised in that the pressing device (2) is in the form of a piston.